**Europäisches Patentamt**

**European Patent Office**

**Office européen des brevets**

(19)

(11) Publication number : **0 277 708 B1**

(12) **EUROPEAN PATENT SPECIFICATION**

(45) Date of publication of patent specification :
26.10.94 Bulletin 94/43

(51) Int. Cl.[5] : **G21C 3/62, C04B 35/00**

(21) Application number : **88300215.6**

(22) Date of filing : **12.01.88**

(54) **Pellet fabrication.**

(30) Priority : **03.02.87 GB 8702371**

(43) Date of publication of application :
**10.08.88 Bulletin 88/32**

(45) Publication of the grant of the patent :
**26.10.94 Bulletin 94/43**

(84) Designated Contracting States :
**BE DE FR IT**

(56) References cited :
EP-A- 0 036 214
FR-A- 1 352 036
FR-A- 1 575 154
JOURNAL OF NUCLEAR MATERIALS, vol. 106,
no. 1/3, April 1982, pages 15-33, North-Holland,
Amsterdam, NL; H. ASSMAN: "Überblick über
Zusamenhänge zwischen LWR-Brennstoff-
Eigenschaften und Verfahrensabläufen bei
der Brennstoffproduktion"
JOURNAL OF NUCLEAR MATERIALS, vol. 106,
no. 1/3, April 1982, pages 191-198, North-
Holland, Amsterdam, NL; D. VOLLATH et al.:
"Influence of process parameters on the fab-
rication of UO2-PuO2 pellets using the granu-
lation technique"

(56) References cited :
JOURNAL OF NUCLEAR MATERIALS, vol. 106,
no. 1/3, April 1982, pages 35-44, North-Holland,
Amsterdam, NL; H. BAIRIOT et al.:
"Perfomance-related characteristics of water
reactor fuel"
JOURNAL OF NUCLEAR MATERIALS, vol. 106,
no. 1/3, April 1982, pages 199-210, North-
Holland, Amsterdam, NL; D. HANUS et al.:
"Uran- und Plutonium-Verteilung in unbes-
trahltem Mischoxid-Brennstoff aus der indus-
triellen Fertigung"

(73) Proprietor : **British Nuclear Fuels PLC**
**Risley Warrington Cheshire, WA3 6AS (GB)**

(72) Inventor : **Marshall, Alan**
**West View**
**Beckermet Cumbria (GB)**
Inventor : **Holburt, Geoffrey Alan**
**6 Santon Way**
**Seascale Cumbria (GB)**
Inventor : **Lawrence, Anthony Edward**
**8 Scaw Road**
**High Harrington**
**Workington Cumbria (GB)**

(74) Representative : **McCormack, Derek James et**
**al**
**"Patents Section"**
**Legal Department**
**British Nuclear Fuels plc**
**GB-Risley, Warrington, Cheshire WA3 6AS**
**(GB)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The present invention concerns the fabrication of pellets, in particular nuclear fuel pellets comprising uranium dioxide or a mixture of uranium and plutonium dioxides.

The fabrication of pellets basically involves the pressing of powder into green pellets which are then sintered to a required density. The powder feed to the pelleting presses must have good pour qualities such that it will flow freely and evenly into the press dies. To achieve good pour qualities it is accepted practice to granulate the powder using either a binder or binderless technique.

The binder technique involves the addition of a proprietary organic binding agent to the powder. The powder is slurried with solvent and binder, the slurry is spray-dried to dispel solvent and granules are discharged and classified on vibratory screens. Alternatively, powder mixing with binder and solvent can be achieved in a dough-mixer, which can also be used to dispel solvent during the mixing process.

In the binderless technique, powder is pre-compacted into briquettes which are then fractured, sieved and conditioned to produce granules for subsequent pelleting operations.

The initial step in both the binder and binderless techniques can involve attrition of the powder feed, conveniently by ball milling. This step serves to break down the powder and in the case where the feed is a mixture of different powders to achieve homogenisation.

As a result of further work and study of the binderless technique it was observed that a free-flowing feed supply for the die presses can be provided instead of the usual.

A method known as the "AUC" route for the production of a pourable $UO_2$ or $UO_2/PuO_2$ mixed powder which is a free-flowing feed supply and may be directly pressed is described in the Journal of Nuclear Materials, Vol. 106, No. 1/3, April 1982, pages 15 to 33. The method described in that reference only works with a specific powder having specific ideal powder characteristics, ie "a pourable powder with adequate sintering activity," which result from the use of specific process conditions. It is admitted in the reference that a milling stage may be necessary for various reasons before further processing of the powder, e.g. to provide an increase in the sintering activity of the $UO_2$ powder, a change in the powder characteristics which cause an undesirable pellet structure and homogeneous admixture of additives containing Pu, Gd etc. Where milling is required the reference teaches that granulation either as wet granulation or pre-compaction and dry granulation is required after milling.

EP-A- 0036214 corresponding to US-A 4676935 describes a method for the treatment of mixed $UO_2$ and $PuO_2$ powders for the production of nuclear fuel pellets and involves the step of milling the powders. However, in that case the method is aimed at increasing pellet solubility in nitric acid and requires milling of powders to 2 micrometers which will give extreme difficulty if applied to plutonium oxide due to dispersion of contamination and design difficulty in providing adequate containment. Also, after milling the step of granulation is applied so that the production of a free-flowing material does not follow after milling without granulation.

According to the present invention a method of producing nuclear fuel pellets comprises producing a free-flowing powder by a process which includes a step of milling a powder comprising uranium oxide or a mixture of uranium oxide and plutonium oxide, and pressing the free-flowing powder into green pellets having a required density characterised in that the milling step is carried out without any pre-compaction and granulation of the product of that step and that the product of the milling step is treated by conditioning by rolling to provide free flow of the powder, the conditioning step being carried out after the milling step.

The invention omits the pre-compaction and granulation stages after milling from the existing binderless route for pellet production and for convenience can be termed the "short binderless route". We have observed that a free-flowing feed supply for the die presses can be provided from the product of a milling step where that is necessary with omission of the previously used pre-compaction and granulation steps and the omission of such steps allows saving in plant and equipment.

In the method according to the present invention a lubricant such as zinc stearate can be introduced into the mill, preferably before the introduction of the powder, in order to prevent compaction within the mill.

The invention will be described further by reference to the following examples utilising uranium dioxide powder and a mixture of uranium dioxide and plutonium dioxide powders.

The characteristics of uranium dioxide and 600°C calcined plutonium dioxide employed as starting materials are:-

EP 0 277 708 B1

|  | UO$_2$ | PuO$_2$ |
|---|---|---|
| Heavy Metal concentration | 86.94% U | 87.95% Pu |
| Specific Surface Area M$^2$/g | 2.2 | 9.4 |
| Tap Density g/cc | 1.79 | 2.58 |
| Pour Density g/cc | 0.93 | - |

Tests were performed on UO$_2$ powder alone and on a mixture of 96% UO$_2$ and 4% PuO$_2$ powders, both with and without the precompaction and granulation stages.

Attrition by ball milling can be performed in a rolling polypropylene mill pot using hardened steel balls at a ball/charge weight ratio of approximately 6/1. The balls ranged in diameter from 6 to 19mm. Preferably the mill was run for a short time interval of about one minute with approximately 0.1% zinc stearate powder before adding the charge.

Where used, precompaction was achieved in a 25mm die fitted to a 10 ton hydraulic press. The precompaction pressure was adjusted to result in a precompact density of about 4.5 g/cc. The precompacts were broken and granulated through a stainless steel mesh.

Conditioning can be achieved by rolling either powder or granules in a cylinder. Conveniently, after conditioning, approximately 0.2% zinc stearate can be added to serve as a lubricant for the subsequent pelletising operation.

Green pellets were pressed hydraulically in a 9.9mm diameter die. Geometric green densities were measured on the pellets pressed at various pressures in the range 2.36 to 6.30 Te/cm$^2$.

Green pellets can be sintered in a 4.6% H$_2$-Ar atmosphere using a batch furnace operating at a maximum temperature of 1650°C. The heating rate was 200°C/hour and the normal sintering time at maximum temperature was 6 hours.

UO$_2$ powder from the milling stage was divided into two batches, batch 1 being processed by the normal binderless route to include precompaction and granulation and batch 2 being processed by the short binderless route. A comparison of the densities of the green and sintered pellets is given in the following table.

| Pelletising Pressure Te/cm$^2$ | Geometric Density Green g/cc | | | | |
|---|---|---|---|---|---|
| | 3.15 | 3.94 | 4.73 | 5.51 | 6.30 |
| Batch 1 | 6.03 | 6.17 | 6.29 | - | - |
| Batch 2 | 6.21 | 6.36 | 6.47 | 6.59 | 6.67 |

| Pelletising Pressure Te/cm$^2$ | Geometric Density Sintered g/cc | | | | |
|---|---|---|---|---|---|
| | 3.15 | 3.94 | 4.73 | 5.51 | 6.30 |
| Batch 1 | 10.62 | 10.63 | 10.57 | - | - |
| Batch 2 | 10.65 | 10.73 | 10.71 | 10.67 | 10.69 |

3

Similar comparisons were made with batches 3 to 6 of a mixture of 96% $UO_2$, 4% $PuO_2$ powders. Batches 3 and 4 were subjected to the full binderless route and batches 5 to 6 to the short binderless route with the results as given in the following table.

| Pelletising Pressure Te/cm$^2$ | Geometric Density Green g/cc | | | | |
|---|---|---|---|---|---|
| | 3.15 | 3.94 | 4.73 | 5.51 | 6.30 |
| Batch 3 | 6.17 | 6.31 | 6.44 | 6.56 | 6.70 |
| Batch 4 | 6.13 | 6.29 | 6.42 | 6.55 | 6.66 |
| Batch 5 | - | 6.29 | 6.46 | 6.57 | - |
| Batch 6 | - | 6.30 | 6.44 | 6.56 | - |

| Pelletising Pressure Te/cm$^2$ | Geometric Density Sintered g/cc | | | | |
|---|---|---|---|---|---|
| | 3.15 | 3.94 | 4.73 | 5.51 | 6.30 |
| Batch 3 | 10.59 | 10.64 | 10.62 | 10.65 | 10.56 |
| Batch 4 | 10.61 | 10.63 | 10.65 | 10.65 | 10.66 |
| Batch 5 | - | 10.62 | 10.71 | 10.67 | - |
| Batch 6 | - | 10.60 | 10.67 | 10.67 | - |

With 100% $UO_2$, the results show that somewhat higher green and sintered density pellets are produced by the short binderless route.

With 96% $UO_2$ - 4% $PuO_2$ the results show that no significant difference exists between the densities of green and sintered pellets obtained by the two binderless routes and demonstrate the feasibility of the short binderless route for the fabrication of oxide nuclear fuel pellets.

As an alternative to a conventional rolling ball mill it is possible to employ an attritor mill in which the balls are driven within an upright cylinder or barrel having a rotatable paddle. Thus an attritor mill having a charge of 18Kg hardened stainless steel balls was run at speeds of 120 to 240 rpm (revolutions per minute) with milling times of between 10 and 30 minutes. Results indicate that 10 minutes Attritor milling at 180 rpm yields a powder with very similar tap-density and specific surface area to that achieved by six hours ball milling.

## Claims

1. A method of producing nuclear fuel pellets by a binderless technique which comprises producing a free-flowing powder by a process which includes a step of milling a powder comprising uranium oxide or a mixture of uranium oxide and plutonium oxide, and pressing the free-flowing powder into green pellets having a required density characterised in that the milling step is carried out without any pre-compaction and granulation of the product of that step and that the product of the milling step is treated by conditioning by rolling to provide free flow of the powder, the conditioning step being carried out after the milling step.

2. A method as in Claim 1 and wherein the milling step is carried out in an attritor mill in which a paddle is employed to assist the action of balls.

3. A method as in Claim 2 and wherein the milling step is carried out in an attritor mill wherein balls are driven within an upright cylinder or barrel having a rotatable paddle.

4

4. A method as in Claim 2 and wherein the paddle is rotated at a speed of between 120 revolutions per minute and 240 revolutions per minute.

5. A method as in Claim 3 and wherein the milling time is between 10 and 30 minutes.

6. A method as in any one of Claims 1 to 4 and wherein the powder comprises uranium oxide and plutonium oxide which are added together by mixing.

7. A method as in any one of Claims 1 to 5 and wherein the milling step includes the use of a lubricant.

8. A method as in Claim 6 and wherein the lubricant is zinc stearate.

9. A method as in any one of Claims 1 to 7 and wherein a lubricant is added to the powder after the conditioning step.

10. A method as in Claim 8 and wherein the lubricant added after conditioning is zinc stearate.


**Patentansprüche**

1. Verfahren zur Herstellung nuklearer Treibstoffpellets durch eine bindemittelfreie Technik, bei dem ein rieselfähiges Pulver durch ein das Mahlen eines Uranoxid oder eine Mischung aus Uran- und Plutoniumoxid enthaltenden Pulvers umfassendes Verfahren hergestellt wird und das rieselfähige Pulver zu Grünpellets der erforderlichen Dichte gepreßt wird, dadurch gekennzeichnet, daß der Mahlschritt ohne Vorverdichtung und Granulierung des Produkts aus diesem Schritt durchgeführt wird und daß das Produkt des Mahlschritts durch Walzen konditioniert wird, um die Rieselfähigkeit des Pulvers zu gewährleisten, wobei der Konditionierschritt nach dem Mahlschritt erfolgt.

2. Verfahren nach Anspruch 1, bei dem der Mahlschritt in einem Attritor durchgeführt wird, in dem ein Paddel verwendet wird, um die Wirkung der Kugeln zu unterstützen.

3. Verfahren nach Anspruch 2, bei der der Mahlschritt in einem Attritor erfolgt, in dem die Kugeln in einem aufrechten Zylinder oder einer Trommel mit einem rotierbaren Paddel angetrieben werden.

4. Verfahren nach Anspruch 2, bei dem das Paddel mit einer Geschwindigkeit zwischen 120 und 240 Umdrehungen pro Minute angetrieben wird.

5. Verfahren nach Anspruch 3, bei dem die Mahlzeit zwischen 10 und 30 Minuten beträgt.

6. Verfahren nach einem der Ansprüche 1 bis 5, bei dem das Pulver Uranoxid und Plutoniumoxid umfaßt, die durch Vermischen zusammengegeben werden.

7. Verfahren nach einem der Ansprüche 1 bis 6, bei dem während des Mahlschritts ein schmiermittel verwendet wird.

8. Verfahren nach Anpruch 7, bei dem das Schmiermittel Zinkstearat ist.

9. Verfahren nach einem der Ansprüche 1 bis 8, bei dem das Schmiermittel dem Pulver nach dem Konditionierschritt zugesetzt wird.

10. Verfahren nach Anspruch 9, bei dem das nach der Konditionierung zugesetzte Schmiermittel Zinkstearat ist.


**Revendications**

1. Procédé de production de pastilles d'un combustible nucléaire, que l'on obtient par une technique ne faisant pas appel à du liant, le procédé comprenant la production d'une poudre fluide ("s'écoulant librement") par un procédé qui comprend une étape de broyage d'une poudre comportant de l'oxyde d'uranium ou un mélange d'oxyde d'uranium et d'oxyde de plutonium, et le pressage de la poudre fluide pour obtenir des pastilles "vertes" ayant une densité requise, procédé caractérisé en ce que l'étape de broyage est effectuée sans aucun précompactage ni granulation du produit de cette étape et en ce que le produit de l'étape de broyage est traité par conditionnement par laminage ou cylindrage pour obtenir la fluidité de libre écoulement de la poudre, l'étape de conditionnement étant réalisée après l'étape de broyage.

2. Procédé tel qu'à la revendication 1, et dans lequel l'étape de broyage est effectuée dans un broyeur par attrition ou usure, dans lequel on utilise une palette pour faciliter et amplifier l'action des billes.

3. Procédé selon la revendication 2, dans lequel l'étape de broyage est effectuée dans un broyeur à attrition dans lequel des billes sont entraînées au sein d'un cylindre ou tambour vertical comportant une palette rotative.

4. Procédé selon la revendication 2, dans lequel la palette est mise en rotation à une vitesse comprise entre 120 tr/min et 240 tr/min.

5. Procédé selon la revendication 3, dans lequel le temps de durée du broyage se situe entre 10 et 30 min.

6. Procédé selon l'une quelconque des revendications 1 à 5, dans lequel la poudre comprend de l'oxyde d'uranium et de l'oxyde de plutonium que l'on ajoute ensemble par mélangeage.

7. Procédé selon l'une quelconque des revendications 1 à 6, dans lequel l'étape de broyage comprend l'utilisation d'un lubrifiant.

8. Procédé selon la revendication 7, dans lequel le lubrifiant est le stéarate de zinc.

9. Procédé selon l'une quelconque des revendications 1 à 8, dans lequel le lubrifiant est ajouté à la poudre après l'étape de conditionnement.

10. Procédé selon la revendication 9, dans lequel le lubrifiant ajouté après conditionnement est du stéarate de zinc.